Europäisches Patentamt

European Patent Office

Office européen des brevets

(11) Veröffentlichungsnummer: **0 277 576**
A2

(12) **EUROPÄISCHE PATENTANMELDUNG**

(21) Anmeldenummer: 88101031.8

(22) Anmeldetag: 25.01.88

(51) Int. Cl.⁴: **B60B 27/02** , B62K 25/02

(30) Priorität: 31.01.87 DE 3702863

(43) Veröffentlichungstag der Anmeldung:
10.08.88 Patentblatt 88/32

(84) Benannte Vertragsstaaten:
DE FR GB IT

(71) Anmelder: **Fichtel & Sachs AG**
**Ernst-Sachs-Strasse 62**
**D-8720 Schweinfurt(DE)**

(72) Erfinder: **Kühne, Karl-Joachim**
**Neue Strasse 9**
**D-8721 Niederwerrn(DE)**

(74) Vertreter: **Liska, Horst, Dr. et al**
**Patentanwälte H. Weickmann, Dr. K. Fincke,**
**F.A. Weickmann, B. Huber, Dr. H. Liska, Dr. J.**
**Prechtel Möhlstrasse 22 Postfach 86 08 20**
**D-8000 München 86(DE)**

(54) **Schnellspann-Antriebsnabe für ein Fahrrad.**

(57) Die Schnellspann-Antriebsnabe für ein Fahrrad umfaßt ein rohrförmiges, erstes Achsteil (17), welches für sich an dem Fahrrad befestigt werden kann und einen Antreiber (5) drehbar trägt. Mit dem Antreiber (5) ist lösbar eine Nabenhülse (3) gekuppelt, die an einem in das erste Achsteil (17) einsteckbaren, zweiten Achsteil (21) drehbar gelagert ist. Das zweite Achsteil (21) tritt auf der von der Nabenhülse (3) fernen Seite aus dem ersten Achsteil (17) axial aus und ist hier mittels einer auf das erste Achsteil (17) aufgeschraubten Riegelkupplung (57) axial fixiert. Das andere Ende des zweiten Achsteils (21) trägt eine Exzenter-Schnellspannvorrichtung (71). Die Riegelkupplung (57) ist durch Drucktasten (67) manuell lösbar und erlaubt rasches Ein-und Ausbauen des als Steckachse ausgebildeten zweiten Achsteils (21), ohne hierzu das zweite Achsteil beim Wiedereinbau justieren zu müssen.

FIG.1

## Schnellspann-Antriebsnabe für ein Fahrrad

Die Erfindung betrifft eine Schnellspann-Antriebsnabe für ein Fahrrad.

Schnellspann-Antriebsnaben für Fahrräder, wie sie beispielsweise aus der deutschen Offenlegungsschrift DE-A-33 31 557 oder dem damit korrespondierenden US-Patent 4 567 973 bekannt sind, haben eine zweigeteilte Achsanordnung, von der ein erstes Achsteil den Antreiber der Nabe trägt und unabhängig von dem zweiten Achsteil für sich am Rahmen des Fahrrads, d.h. am Ausfallende seiner Hinterradgabel, befestigt ist. Die mit dem Antreiber lösbar gekuppelte Nabenhülse ist auf dem als Steckachse ausgebildeten zweiten Achsteil gelagert und kann nach dem Herausziehen der Steckachse abgenommen werden, ohne zugleich die Justierung des das Kettenzahnrad tragenden Antreibers lösen zu müssen. Derartige Schnellspannaben erleichtern damit den Ein-und Ausbau des Antriebsrads.

Bei der bekannten Antriebsnabe hat das erste Achsteil ein Gewindeloch, in das das durch die Nabenhülse hindurchgesteckte zweite Achsteil mit einem Ende eingeschraubt wird. Am anderen Ende trägt das zweite Achsteil eine axial wirkende Exzenter-Spannvorrichtung, mit der das zweite Achsteil am Fahrradrahmen festgespannt werden kann. Allerdings muß bei der bekannten Schnellspann-Antriebsnabe die Einschraubtiefe des zweiten Achsteils entsprechend dem Arbeitshub der Exzenter-Spannvorrichtung justiert werden.

Es ist Aufgabe der Erfindung, den Ein-und Ausbau einer Schnellspann-Antriebsnabe der vorstehend erläuterten Art zu vereinfachen und insbesondere die Antriebsnabe so zu verbessern, daß die Achsverbindung leichter und rascher gelöst bzw. wieder geschlossen werden kann und die Exzenter-Schnellspannvorrichtung beim Wiedereinbauen nicht erneut justiert werden muß.

Im Rahmen der Erfindung trägt das den Antreiber lagernde, für sich am Fahrradrahmen zu befestigende erste Achsteil eine axial justierbare Riegelkupplung. Die Riegelkupplung ist manuell bedienbar, vorzugsweise über Drucktasten, und erlaubt die Fixierung des die Exzenter-Spannvorrichtung tragenden zweiten Achsteils in der durch die Kupplungsjustierung bestimmten Lage. Das zweite Achsteil braucht dementsprechend für die Montage nur noch eingesteckt zu werden und muß nicht mehr seinerseits justiert werden.

Zweckmäßigerweise hat die Riegelkupplung ein auf das erste Achsteil aufgeschraubtes und damit axial justierbares Gehäuse, in welchem wenigstens ein Riegelstück radial zu einer an dem zweiten Achsteil vorgesehenen, zugeordneten Aussparung verschiebbar geführt ist. Um eine besonders exakte Justierung des Gehäuses zuzulassen, ist die Aussparung zweckmäßigerweise als Ringnut ausgebildet und steht allseitig zugänglich über das erste Achsteil vor.

Das in dem Gehäuse verschiebbar geführte Riegelstück der Kupplung wird von einer Feder relativ zu der Ringnut vorgespannt und kann mittels einer von außerhalb des Gehäuses zugänglichen Drucktaste gegen die Vorspannung verschoben werden. Wird das Riegelstück von der Feder aus der Ringnut herausgehalten, so trägt es zweckmäßigerweise einen Vorsprung, der in eine Hinterschneidung der Ringnut eingreifen kann. Allerdings genügt auch die von der Exzenter-Spannvorrichtung ausgeübte Haltekraft, um das Riegelstück in Eingriff mit der Ringnut halten zu können.

Wird das Riegelstück von der Feder in die Ringnut hinein vorgespannt, so kann die Drucktaste der Handhabungsvorrichtung entweder diametral gegenüberliegend, bezogen auf das erste Achsteil, angeordnet sein, oder aber bei einer um beispielsweise 90° winkelversetzten Anordnung der Drucktaste über eine Schrägschubfläche aus der Ringnut herausgedrückt werden.

Prinzipiell genügt ein einziges Riegelstück für eine betriebssichere Verbindung der beiden Achsteile. Um jedoch die mechanische Belastung des Gehäuses der Riegelkupplung, der Riegelstücke und deren Führungen möglichst gering zu halten, sollten die Riegelflächen symmetrisch zum zweiten Achsteil, d.h. auf diametral gegenüberliegenden Seiten des zweiten Achsteils, angreifen. Bei einem einzigen Riegelstück läßt sich diese Forderung durch ein das zweite Achsteil aufnehmendes Langloch verwirklichen, welches in einem ersten Abschnitt den Durchtritt des zweiten Achsteils erlaubt und das sich in einem zweiten Abschnitt für den Eingriff in die Ringnut verengt. In Ausführungsformen mit zwei Riegelstücken können diese mit ihren Riegelflächen diametral gegenüberliegend in dem Gehäuse angeordnet werden. Ausführungsformen mit zwei Riegelstücken haben darüberhinaus den Vorteil, daß sie durch eine gemeinsame Feder relativ zueinander vorgespannt werden können, so daß das Gehäuse keine radialen Federkräfte aufnehmen muß. Den beiden Riegelstücken sind hierbei zweckmäßigerweise gesonderte Drucktasten für deren Betätigung zugeordnet.

Im folgenden werden Ausführungsbeispiele der Erfindung anhand einer Zeichnung näher erläutert. Hierbei zeigt:

Fig. 1 in ihrer oberen Hälfte einen Axiallängsschnitt durch eine erfindungsgemäße Freilauf-Antriebsnabe eines Fahrrads und in ihrer unteren Hälfte eine Draufsicht auf die Antriebsnabe;

Fig. 2 eine teilweise Schnittansicht durch eine erste Variante einer bei der Antriebsnabe der Fig. 1 verwendbaren Riegelkupplung, gesehen entlang einer Linie II-II in Fig. 3;

Fig. 3 einen Axialquerschnitt durch die Riegelkupplung, gesehen entlang einer Linie III-III in Fig. 2;

Fig. 4 einen teilweisen Axiallängsschnitt durch eine zweite Variante einer in der Antriebsnabe der Fig. 1 verwendbaren Riegelkupplung;

Fig. 5 einen Axialquerschnitt durch die Riegelkupplung, gesehen entlang einer Linie V-V in Fig. 4;

Fig. 6 einen Axiallängsschnitt durch eine dritte Variante einer bei der Antriebsnabe der Fig. 1 verwendbaren Riegelkupplung;

Fig. 7 einen Axialquerschnitt durch die Riegelkupplung, gesehen entlang einer Linie VII-VII in Fig. 6;

Fig. 8 eine schematische Darstellung einer vierten Variante einer bei der Antriebsnabe der Fig. 1 verwendbaren Riegelkupplung;

Fig. 9 einen teilweisen Axiallängsschnitt durch eine fünfte Variante einer bei der Antriebsnabe nach Fig. 1 verwendbaren Riegelkupplung und

Fig. 10 einen Axialquerschnitt durch die Riegelkupplung, gesehen entlang einer Linie X-X in Fig. 9.

Die Freilauf-Antriebsnabe umfaßt eine allgemein mit 1 bezeichnete Nabenachse 1, an der drehbar eine Nabenhülse 3 sowie axial neben der Nabenhülse 3 ein Antreiber 5 gelagert sind. Die Nabenhülse 3 trägt mit axialem Abstand voneinander zwei Speichenflansche 7, 9. Auf dem Antreiber 5 sitzen fest mehrere Kettenzahnräder 11. Ein Klinkenfreilauf 13 kuppelt den Antreiber 5 in einer Drehrichtung drehfest mit der Nabenhülse 3, während er in der anderen Drehrichtung relativ zur Nabenhülse 3 frei drehbar ist. Die Nabenachse 1 ist an Ausfallenden 15 einer Hinterradgabel des Fahrrads befestigt.

Die Nabenachse 1 ist axial teilbar ausgebildet und umfaßt ein rohrförmiges erstes Achsteil 17 sowie ein die Nabenhülse 3 durchsetzendes zweites Achsteil 21, welches in das Achsteil 17 eingreift und mit einer Verlängerung 23 durch das Achsteil 17 hindurchreicht. Das Achsteil 17 ist an seinem der Nabenhülse 3 fernen Ende mit einem Außengewinde 25 versehen und mit Hilfe von zwei Muttern 27, 29 an der Hinterradgabel 15 festgeschraubt. Der Antreiber 5 ist über zwei Kugellager 31, 33 an dem Achsteil 17 gelagert. Die äußeren Laufbahnen der Kugellager 31, 33 sind an dem hülsenförmigen Antreiber 5 angeformt. Während der innere Laufring des Kugellagers 31 an dem Achsteil 17 angeformt ist, wird der innere Laufring des Kugellagers 33 durch einen Stellkonus 35 gebildet, der auf das Gewinde 25 geschraubt und mittels der Mutter 27 gekontert ist.

Die Nabenhülse 3 trägt im Bereich ihrer Speichenflansche 7, 9 in hohlzylindrischen, nach axial außen offenen Aussparungen 37, 39 je ein Rillenkugellager 41 bzw. 43, das über seinen jeweils äußeren Lagerring sowohl axial als auch radial an der Nabenhülse 3 fixiert ist. Die Anordnung auf den Innenringen der Kugellager 41, 43 und der Distanzhülse 45 sitzt hierbei zwischen einem Abstandring 47 und der Stirnfläche des Achsteils 17.

Der Klinkenfreilauf 13 umfaßt Klinken 49, die an ihrem radial äußeren Ende um eine Drehachse parallel zur Nabenachse 1 schwenkbar in einem den Antreiber 5 koaxial umschließenden Lagerring 51 schwenkbar gelagert sind. Der Lagerring 51 ist fest in einer axial an das Kugellager 43 anschließenden Ausnehmung 53 der Nabenhülse 3 gehalten. Die Klinken 49 greifen mit ihren radial inneren Enden in axiale, am Außenmantel des Antreibers verteilt angeordnete Nuten 55, die eine Klinkenverzahnung des Klinkenfreilaufs 13 bilden. Nicht näher dargestellte Federn spannen die Klinken 49 radial nach innen in die Nuten 55 hinein vor. Die Nuten 55 erstrecken sich über die gesamte axiale Länge des Antreibers 5 und dienen zugleich der drehfesten Befestigung der Kettenzahnräder 11.

Das Achsteil 21 ist von außerhalb der Hinterradgabel 15 her axial in die Nabenhülse 3 einsteckbar und ist über eine nachfolgend noch näher erläuterte, manuell bedienbare Riegelkupplung 57 axial fest mit dem Achsteil 17 kuppelbar. Die Riegelkupplung 57 umfaßt ein auf das freie Ende des Achsteils 17 aufgeschraubtes, kappenförmiges Gehäuse 59, in dem wenigstens ein Riegelstück 61 radial zum Achsteil 17 verschiebbar geführt ist. Dem Riegelstück 61 ist eine Aussparung 63 an dem über das Achsteil 17 vorstehenden Ende 65 des Achsteils 21 zugeordnet. Die Anordnung ist so getroffen, daß sich das in die Aussparung 63 eingreifende Riegelstück 61 über das Gehäuse 59 an dem Achsteil 17 abstützen kann. Mittels wenigstens einer bei 67 angedeuteten Drucktaste kann das in nicht näher dar·gestellter Weise federnd vorgespannte Riegelstück 61 gegen seine Vorspannung verschoben und damit manuell in bzw. außer Eingriff mit der Aussparung 63 gebracht werden.

An seinem der Riegelkupplung 57 abgewandten Ende 69 trägt das Achsteil 21 eine Exzenter-Spannvorrichtung 71 mit einer in dem Achsteil 21 drehbar gelagerten Exzenterwelle 73, deren Drehachse exzentrisch zu zylindrischen Spannflanschen 75 verläuft, die drehbar in einer Kappe 77 gelagert sind. Die Exzenterwelle 73 und die Spannflansche 75 sind einstückig mit einem quer zur Exzenterwelle 73 verlaufenden Spannhebel 79 verbunden. Beim Schwenken des Spannhebels 79 wird die Spannkappe 77 axial zum Achsteil 21 verschoben. Die Exzenter-Spannvorrichtung spannt damit über das mittels der Riegelkupplung 57 am Achsteil 17 festgelegte Achsteil 21 die Nabenhülse 3 zwischen dem Achsteil 17 und der Distanzbuchse 47 ein. Durch Verdrehen des auf dem Gewinde 25 sitzenden Gehäuses 59 der Riegelkupplung 57 kann der Spannhub der Exzenter-Spannvorrichtung 71 relativ zum fest mit der Hinterradgabel 15 verbundenen Achsteil 17 justiert werden.

Für den Ausbau der Nabenhülse 3 wird die Exzenter-Spannvorrichtung 71 entspannt und die Riegelkupplung 57 gelöst. Damit kann das Achsteil 21 aus der Nabenhülse 3 herausgezogen werden. Nach Abnehmen des Distanzrings 47 kann die Nabenhülse 3 vom Antreiber 5 axial abgezogen und dann entnommen werden. Die Justierung des Achsteils 17 relativ zur Hinterradgabel 15 und damit die Justierung der Kettenzahnräder 11 wird hierbei nicht geändert. Der Einbau der Nabenhülse 3 erfolgt in umgekehrter Reihenfolge. Eine Justierung des Achsteils 21 relativ zum rahmenfesten Achsteil 17 ist ebenfalls nicht erforderlich, da die Justierung der Riegelkupplung 57 für den Ausbau der Nabenhülse 3 nicht verändert werden muß.

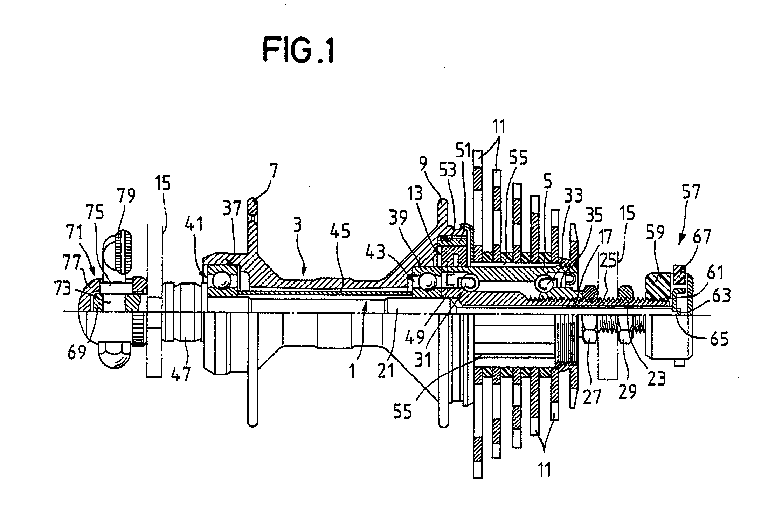

Im folgenden werden Varianten der Riegelkupplung beschrieben. Gleichwirkende Teile sind mit den Bezugszahlen aus Fig. 1 und zur Unterscheidung mit einem Buchstaben versehen. Zur Erläuterung des Aufbaus und der Wirkungsweise der Antriebsnabe und der Riegelkupplung wird auf die Beschreibung der Fig. 1 Bezug genommen.

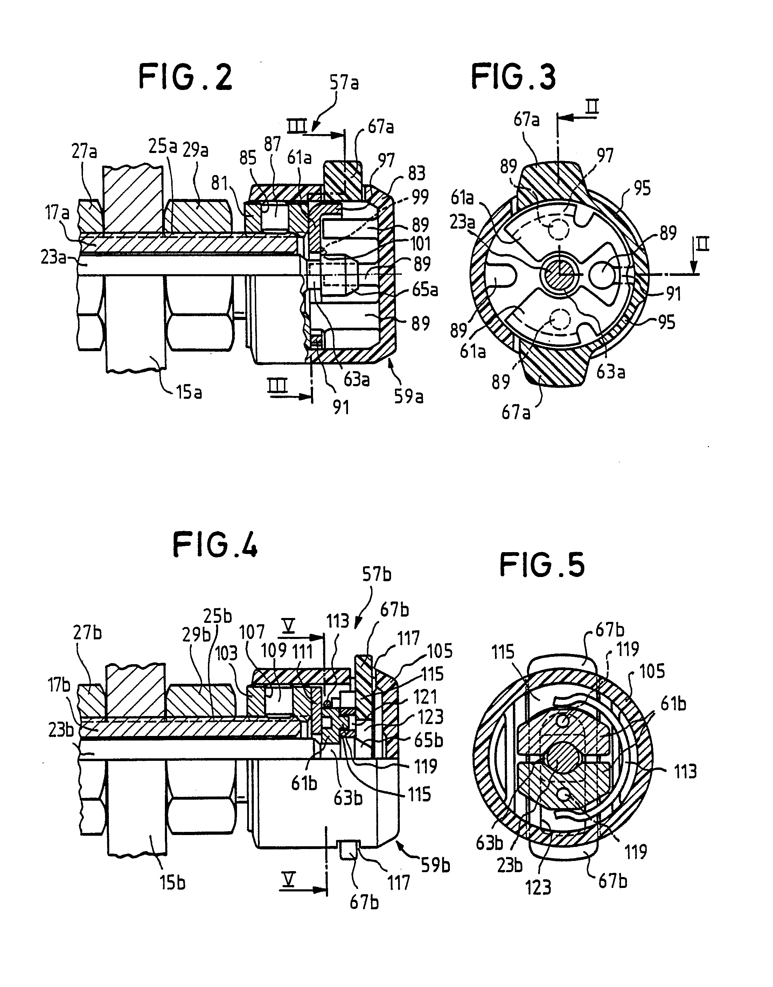

Die Fig. 2 und 3 zeigen eine Riegelkupplung 57a, deren Gehäuse 59a aus einer auf das Gewinde 25a des Achsteils 17a aufgeschraubten Mutter 81 und einer auf die Mutter aufgesetzten, das freie Ende des Achsteils 17a umschliessenden Kappe 83 aus einem flexiblen Kunststoffmaterial besteht. Die Mutter 81 enthält in einer Bohrung 85 einen gegen das Gewinde 25a drückenden Kunststoffstopfen 87 als Verdrehsicherung. Auf der Innenseite der Kappe 83 angeformte Stege 89 führen zwei kreissegmentförmige Riegelstücke 61a radial beweglich in Anlagekontakt mit der Mutter 81. Die Riegelstücke 61a liegen sich, bezogen auf das Achsteil 17a, diametral gegenüber und sind durch einen federnden Steg 91 einstückig miteinander verbunden. Auf der zur Achsteilverlängerung 23a radial abgewandten Seite jedes der beiden Riegelstücke 61a sind radial bewegliche Drucktasten 67a vorgesehen, die über den Außenumfang der Kappe 83 vorstehen und mittels der die Riegelstücke 61a gegen die Federkraft des Stegs 91 nach radial innen in eine Ringnut 63a an dem aus dem Achsteil 17a vorstehenden Ende 65a der Achsteilverlängerung 23a einschiebbar ist. Durch Spannen der Exzenter-Schnellspannvorrichtung der Antriebsnabe werden die nach radial außen federnd vorgespannten Riegelstücke 61a in der Ringnut 63a festgeklemmt. Die Drucktasten 67a sind einstückig an der Kappe 83 angeformt und werden von Zungen 95 radial federnd geführt, die aus der Umfangswand der Kappe 83 ausgeschnitten sind. Zur Verbreiterung der Auflageflächen der Riegelstücke 61a sind an deren Außenumfang Abbiegungen 97 angebogen, an denen sich die Drucktasten 93 abstützen können.

In Fig. 2 ist gestrichelt eine Variante der Riegelstücke 61a eingezeichnet, die an ihrem der Ringnut 63a benachbarten Ende einen der Zugrichtung der Exzenter-Spannvorrichtung entgegengesetzt abstehenden Vorsprung 99 aufweist. Die Ringnut 63a hingegen hat auf ihrer der Exzenter-Schnellspannvorrichtung axial abgewandten Seite eine konusförmig zum Ende 65a hin sich verjüngende Begrenzungswand 101. Die Begrenzungswand 101 bildet für den Vorsprung 99 eine Hinterschneidung, die bei gespannter Exzenter-Spannvorrichtung die auf die Riegelstücke 61a ausgeübte Haltekraft erhöht.

Die Fig. 4 und 5 zeigen eine andere Ausführungsform einer Riegelkupplung 57b, deren Gehäuse 59b wiederum aus einer auf das Gewinde 25b des Achsteils 17b geschraubte Mutter 103 und einer das freie Ende des Achsteils 17b überdekkenden Kappe 105 besteht. Die auf dem Achsteil 17b axial justierbare Mutter 103 enthält zur Drehsicherung in einer Bohrung 107 einen Kunststoffstopfen 109. Die aus Kunststoff bestehende Kappe 105 ist an der Mutter 103 fixiert. An der Mutter 103 liegt eine ringförmige Führungsscheibe 111 an, die die Öffnung der Mutter 103 radial überlappt und zwei diametral sich gegenüberliegende Riegelstücke 61b in einer achsnormalen Ebene axial abgestützt führt. Die Riegelstücke 61b werden von einer Bügelfeder 113 radial aufeinander zu in die Ringnut 63b an dem aus dem Achsteil 27b vorstehenden Ende 65b der Achsteilverlängerung 23b hinein vorgespannt. Die Riegelkupplung 57b ist damit, anders als die Riegelkupplung 57a der Fig. 2 und 3, im Normalzustand verriegelt.

Für die Entriegelung der Riegelkupplung 57b sind auf der von der Mutter 103 axial abgewandten Seite der Riegelstücke 61b zwei langgestreckte, im wesentlichen plattenförmige Betätigungsstücke 115 vorgesehen. Die Betätigungsstücke 115 sind zueinander parallel in achsnormalen Ebenen angeordnet und treten auf diametral gegenüberliegenden Seiten der Umfangswand der Kappe 105 durch Öffnungen 117 aus, wobei die austretenden Enden der Betätigungsstücke 115 einander gegenüberliegende Drucktasten 67b bilden. Die Betätigungsstücke 115 sind in der Kappe 105 relativ zueinander in ihrer Längsrichtung verschiebbar geführt und sind über axiale Zapfen 119, die an den Riegelstücken 161b angeformt sind und in Öffnungen 121 der Betätigungsstücke 115 eingreifen, mit den Riegelstücken 61b gekuppelt. Die Betätigungsstücke 115 haben in deren Verschieberichtung sich erstreckende Langlöcher 123, die das Ende 65b der Achsteilverlängerung 23b aufnehmen. Die Riegelkupplung 57b wird durch gleichzeitiges Drücken der Drucktasten 67b geöffnet und schließt selbsttätig bei Entlastung der Drucktasten.

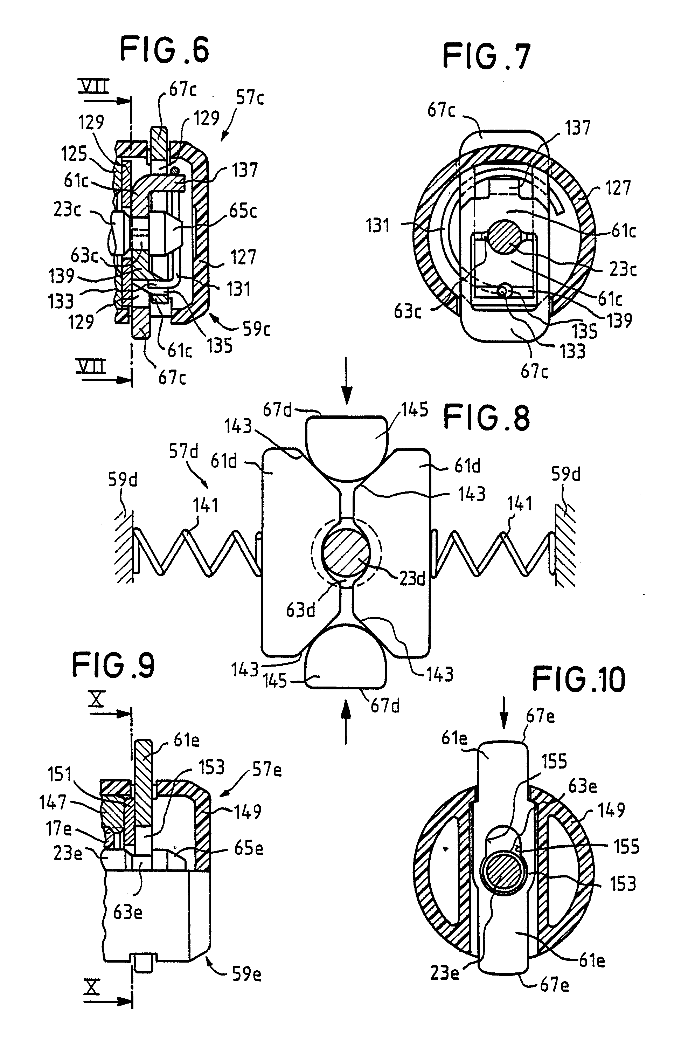

Die Fig. 6 und 7 zeigen eine Riegelkupplung 57c, deren Gehäuse 59c wiederum aus einer durch einen nicht näher dargestellten Kunststoffstopfen gegen Verdrehen gesicherten Mutter 125 und einer Kunststoffkappe 127 besteht. Die Mutter 125 ist in nicht näher dargestellter Weise auf das freie Ende des am Fahrradrahmen befestigten Achsteils aufgeschraubt. Die Riegelstücke 61c sind als langgestreckte, im wesentlichen plattenförmige Blechformteile ausgebildet, die sich flach aneinander anliegend in achsnormalen Ebenen zur Achsteilverlängerung 23c erstrecken. Beide Blechformteile haben Öffnungen 129, die das aus dem rahmenfesten Achsteil vorstehende Ende 65c der Achsteilverlängerung 23c aufnehmen. Die Riegelstücke 61c sind über eine ringförmige Führungsscheibe 129 an der Mutter 125 axial abgestützt und greifen in ihrer Längsrichtung verschiebbar von diametral gegenüberliegenden Seiten her in die Ringnut 63c an dem Ende 65c der Achsteilverlängerung 23c ein. Eine Bügelfeder 131 spannt die Riegelstücke 161c in die Ringnut 63c hinein vor. Die Bügelfeder 131 ist auf der von der Mutter 125 axial abgewandten Seite der Riegelstücke 161c angeordnet und greift mit einer axialen Abbiegung 133 ihres einen Endes in ein Loch 135 des axial benachbarten Riegelstücks 61c, während sie mit ihrem anderen Ende auf einem durch die Öffnung 129 des benachbarten Riegelstücks 61c axial hindurchgreifenden Lappen 137 des entfernt gelegenen Riegelstücks 61c aufliegt. Eines der Riegelstücke 61c, hier das der Mutter 125 entfernt gelegene Riegelstück, ist mit einer in die Öffnung 129 des anderen Riegelstücks eingreifenden Abkröpfung 139 versehen, so daß beide Riegelstücke 61c in eine gemeinsame Ringnut eingreifen können. Die Riegelstücke 61c treten, bezogen auf die Achsteilverlängerung 23c, ihren Riegelflächen diametral gegenüberliegend durch die Umfangswand der Kappe 127 hindurch aus und bilden mit ihren Enden diametral gegenüberliegende Drucktasten 67c. Durch gemeinsames Drücken der Drucktasten 67c kann die normalerweise geschlossene Riegelkupplung 57c gegen die Kraft der Bügelfeder 131 geöffnet werden.

Fig. 8 zeigt schematisch eine Riegelkupplung 57d mit zwei auf diametral gegenüberliegenden Seiten der Achsteilverlängerung 23d angeordneten Riegelstücken 61d, die von Federn 141 aufeinander zu in eine Ringnut 63d am freien Ende der Achsteilverlängerung 23d hinein vorgespannt sind. Die Riegelstücke 61d sind in nicht näher dargestellter Weise an dem auf das rahmenfeste Achsteil aufgeschraubten Gehäuse 59d axial abgestützt. Das Gehäuse kann die vorangegangen erläuterte Konstruktion haben und aus einer Mutter und einer Kappe bestehen. Die Federn 141 können sich, wie dargestellt, an dem Gehäuse 59d abstützen; sie können aber auch durch eine gemeinsame, an den Riegelstücken 69d sich abstützende Bügelfeder gebildet sein.

Die Riegelstücke 61d sind mit schräg zu ihren Verschieberichtungen verlaufenden Schubflächen 143 versehen, die paarweise jeweils einen Keilspalt bilden, in welchen Druckstücke 145 zum Öffnen der Riegelkupplung 57d hineindrückbar sind. Die Druckstücke 145 und dementsprechend die Keilspalte liegen, bezogen auf die Achsteilverlängerung 23d, diametral gegenüber, so daß die im Ruhezustand verriegelnde Riegelkupplung 57d durch gleichzeitiges Drücken der Druckstücke 145 in Richtung der in Fig. 8 eingezeichneten Teile entriegelt werden kann. Die Druckstücke 145 sind in dem Gehäuse 59d verschiebbar geführt und können zugleich mit ihren aus der Umfangswand des Gehäuses 59d austretenden Enden Drucktasten 67d bilden.

Die Fig. 9 und 10 zeigen eine besonders einfache Variante einer Riegelkupplung 57e, die mit einem einzigen Riegelstück 61e auskommt. Die Riegelkupplung 57e hat wiederum ein Gehäuse 59e, bestehend aus einer auf das Achsteil 17e aufgeschraubten Mutter 147 und einer das freie Ende des Achsteils 17e überdeckenden Kappe 149. Das als langgestreckte Platte ausgebildete Riegelstück 61e verläuft im wesentlichen in einer achsnormalen Ebene zur Achsteilverlängerung 23e und ist über eine Ringscheibe 151 an der Mutter 147 axial abgestützt. Das in seiner Längsrichtung in dem Gehäuse 59e axial verschiebbare Riegelstück 61e hat ein in der Längsrichtung sich erstreckendes Langloch 153, das in einem ersten Abschnitt den Durchtritt des aus dem Achsteil 17e austretenden Endes 65e der Achsteilverlängerung 23e erlaubt und sich in einem in Schieberichtung danebenliegenden Abschnitt für den Eingriff in die Ringnut 63e verengt. Das Langloch 153 ist hierzu an seinen beiden Längsrändern mit diametral sich gegenüberliegenden Schultern 155 versehen. Die Längsenden des Riegelstücks 61e treten beide aus der Kappe 149 aus und bilden in Schieberichtung sich gegenüberliegende Drucktasten 67e, über die bei wechselweiser Betätigung die Riegelkupplung 57e geöffnet bzw. geschlossen werden kann.

## Ansprüche

1. Schnellspann-Antriebsnabe für ein Fahrrad, umfassend

a) ein rohrförmiges erstes Achsteil (17), welches Befestigungsmittel (27, 29) für seine unverlierbare Befestigung an dem Fahrrad trägt,

b) einen an dem ersten Achsteil (17) drehbar gelagerten Antreiber (5),

c) eine axial neben dem Antreiber (5) angeordnete, mit dem Antreiber (5) lösbar gekuppelte Nabenhülse (3),

d) ein durch die Nabenhülse (3) hindurch in das erste Achsteil (17) einsteckbares zweites Achsteil (21), an dem die Nabenhülse (3) drehbar gelagert ist,

e) eine axial wirkende Exzenter-Spannvorrichtung (71) an einem ersten (69) der beiden Enden des zweiten Achsteils (21),

f) eine Kupplungsvorrichtung (57) zur axial lösbaren Befestigung des zweiten (65) der beiden Enden des zweiten Achsteils (21) an dem ersten Achsteil (17),

**dadurch gekennzeichnet**, daß die Kupplungsvorrichtung als Riegelkupplung (57) ausgebildet ist und ein an dem ersten Achsteil (17) axial justierbar befestigtes Gehäuse (59), wenigstens ein in dem Gehäuse (59) quer zu dem ersten Achsteil (17) beweglich geführtes Riegelstück (61), eine Aussparung (63) an dem zweiten Ende (65) des zweiten Achsteils (21) für den Kupplungseingriff des Riegelstücks (61) und eine Handhabungsvorrichtung (67) zum manuellen Verschieben des Riegelstücks (61) aufweist.

2. Antriebsnabe nach Anspruch 1, dadurch gekennzeichnet, daß das Gehäuse (57) auf das erste Achsteil (17) aufgeschraubt ist, daß die an dem zweiten Ende (65) des zweiten Achsteils (21) vorgesehene Aussparung als Ringnut (63) ausgebildet ist und axial vor dem ersten Achsteil (17) angeordnet ist.

3. Antriebsnabe nach Anspruch 1 oder 2, dadurch gekennzeichnet, daß die Handhabungsvorrichtung zwei - bezogen auf das erste Achsteil (17e) - auf im wesentlichen diametral gegenüberliegenden Seiten des Gehäuses (59e) zugängliche Drucktasten (67e) umfaßt, über die durch wechselweises Drücken das Riegelstück (61e) in bzw. außer Eingriff mit der Aussparung (63e) des zweiten Achsteils (17e) bringbar ist.

4. Antriebsnabe nach Anspruch 3, dadurch gekennzeichnet, daß die Drucktasten (67e) als einteilig auf diametral gegenüberliegenden Seiten an dem Riegelstück (61e) angeformte Verlängerungen ausgebildet sind.

5. Antriebsnabe nach Anspruch 3 oder 4, dadurch gekennzeichnet, daß das Riegelstück (61e) ein in Schieberichtung langgestrecktes Langloch (153) aufweist, welches in einem ersten Abschnitt den Durchtritt des zweiten Achsteils (23e) erlaubt und sich in einem zweiten Abschnitt für den Eingriff in die Aussparung (63e) verengt.

6. Antriebsnabe nach Anspruch 1 oder 2, dadurch gekennzeichnet, daß das Riegelstück (61a-d) in einer vorbe stimmten Schieberichtung von einer Feder (91; 113; 131; 141) vorgespannt ist und daß dem Riegelstück (61a-d) eine von außerhalb des Gehäuses zugängliche Drucktaste (67a-d) der Handhabungsvorrichtung zugeordnet ist, mittels der das Riegelstück (61a-d) gegen die Vorspannung der Feder (91; 113; 131; 141) manuell verschiebbar ist.

7. Antriebsnabe nach Anspruch 6, dadurch gekennzeichnet, daß die Feder (91) das Riegelstück (61a) von dem zweiten Achsteil (23a) weggerichtet vorspannt und daß das Riegelstück (61a) - bezogen auf das zweite Achsteil (23a) - radial zwischen dem zweiten Achsteil (23a) und der Drucktaste (67a) angeordnet ist.

8. Antriebsnabe nach Anspruch 7, dadurch gekennzeichnet, daß die Aussparung (63a) zum zweiten Ende (65a) des zweiten Achsteils (23a) hin durch eine zum zweiten Ende (65a) hin sich verjüngende Hinterschneidungsfläche (101) begrenzt ist und daß das Riegelstück (61a) einen die Hinterschneidungsfläche (101) hintergreifenden axialen Vorsprung (99) aufweist.

9. Antriebsnabe nach Anspruch 7 oder 8, dadurch gekennzeichnet, daß zwei auf radial gegenüberliegenden Seiten des zweiten Achsteils (23a) angeordnete Riegelstücke (61a) vorgesehen sind, die von einer gemeinsamen Feder (91) voneinander weg vorgespannt sind.

10. Antriebsnabe nach Anspruch 9, dadurch gekennzeichnet, daß die Feder als die Riegelstücke (61a) einteilig miteinander verbindender Steg (91) ausgebildet ist.

11. Antriebsnabe nach Anspruch 9 oder 10, dadurch gekennzeichnet, daß die den beiden Riegelstücken (61a) zugeordneten Drucktasten (67a) an den freien Enden von in Umfangsrichtung des Gehäuses (59a) sich erstreckenden federnden Zungen (95) vorgesehen sind, wobei die Zungen (95) einen Teil einer Umfangswand des Gehäuses (59a) bilden.

12. Antriebsnabe nach Anspruch 6, dadurch gekennzeichnet, daß die Feder (113; 131; 141) das Riegelstück (61b-d) auf das zweite Achsteil (23b-d) zu vorspannt und daß die Drucktaste (67b-d) auf der dem Riegelstück (61b-e) abgewandten Seite des zweiten Achsteils (23b-d) von außerhalb des Gehäuses (59b-d) zugänglich ist.

13. Antriebsnabe nach Anspruch 12, dadurch gekennzeichnet, daß die Handhabungsvorrichtung für jedes Riegelstück (61b, c) ein mit dem zugeordneten Riegelstück (61b, c) verbundenes Betätigungsstück (115; 67c) aufweist, welches in dem Gehäuse (59b, c) in Schieberichtung des Riegelstücks (61b, c) verschiebbar geführt ist und auf der dem Riegelstück (61b, c) abgewandten Seite des zweiten Achsteils (23b, c) zur Bildung der Drucktaste aus dem Gehäuse (59b, c) hervorsteht.

14. Antriebsnabe nach Anspruch 13, dadurch gekennzeichnet, daß zwei auf radial gegenüberliegenden Seiten des zweiten Achsteils (23b, c) angeordnete Riegelstücke (61b, c) vorgesehen sind, die durch eine gemeinsame Feder (113; 131) aufeinander zu vorgespannt sind.

15. Antriebsnabe nach Anspruch 14, dadurch gekennzeichnet, daß die Feder als Bügelfeder (113; 131) ausgebildet ist.

16. Antriebsnabe nach einem der Ansprüche 13 bis 15, dadurch gekennzeichnet, daß das Betätigungsstück (115) axial seitlich des zugeordneten Riegelstücks (61b) angeordnet und durch eine axial steckbare Zapfenkupplung (119, 121) mit dem Riegelstück (61b) gekuppelt ist.

17. Antriebsnabe nach einem der Ansprüche 13 bis 15, dadurch gekennzeichnet, daß das Betätigungsstück einteilig mit dem zugeordneten Riegelstück (61c) verbunden ist und eine Öffnung (129) für den Eingriff des zweiten Achsteils (23c) aufweist, deren der Drucktaste (67c) entfernt gelegener Randbereich das Riegelstück (61c) bildet.

18. Antriebsnabe nach Anspruch 17, dadurch gekennzeichnet, daß die Betätigungsstücke aneinanderliegen und daß das Riegelstück (61c) eines der beiden Betätigungsteile an einem in die Öffnung (119) des anderen Betätigungsteils eingreifenden, gekröpft abgebogenen Lappen (139) vorgesehen ist.

19. Antriebsnabe nach Anspruch 6, dadurch gekennzeichnet, daß die Feder (141) das Riegelstück (61d) auf das zweite Achsteil (23d) zu vorspannt und daß die dem Riegelstück (61d) zugeordnete Drucktaste (145) quer zur Verschieberichtung des Riegelstücks (61d) in dem Gehäuse (59d) verschiebbar geführt und über wenigstens eine schräg zu beiden Verschieberichtungen verlaufende Schubfläche (143) mittels wenigstens einer Drucktaste (145) der Handhabungsvorrichtung entgegen der Federvorspannung verschiebbar ist.

20. Antriebsnabe nach Anspruch 19, dadurch gekennzeichnet, daß zwei auf radial gegenüberliegenden Seiten des zweiten Achsteils (23d) angeordnete, federnd aufeinander zu vorgespannte Riegelstücke (61d) vorgesehen sind, deren Schubflächen (143) paarweise wenigstens einen radial nach außen sich erweiternden Keilspalt bilden, in den die Drucktaste (145) hineindrückbar ist.

# FIG.1

# FIG.2

# FIG.3

# FIG.4

# FIG.5

# FIG.6

# FIG.7

# FIG.8

# FIG.9

# FIG.10